(19)

Europäisches Patentamt
European Patent Office
Office européen des brevets

(11)  **EP 4 089 780 A1**

(12)  **EUROPEAN PATENT APPLICATION**
published in accordance with Art. 153(4) EPC

(43) Date of publication:
**16.11.2022 Bulletin 2022/46**

(21) Application number: **20930738.8**

(22) Date of filing: **17.04.2020**

(51) International Patent Classification (IPC):
**H01M 10/052** (2010.01)    **H01M 50/40** (2021.01)

(52) Cooperative Patent Classification (CPC):
**H01M 10/052; H01M 50/40;** Y02E 60/10

(86) International application number:
**PCT/CN2020/085324**

(87) International publication number:
**WO 2021/208071 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Senior Technology Material Co., Ltd.**
**Shenzhen, Guangdong 518106 (CN)**

(72) Inventors:
• **YAO, Yongqiang**
  **Shenzhen, Guangdong 518106 (CN)**

• **PING, Xiang**
  **Shenzhen, Guangdong 518106 (CN)**
• **ZHANG, Liuhao**
  **Shenzhen, Guangdong 518106 (CN)**
• **WANG, Jinguang**
  **Shenzhen, Guangdong 518106 (CN)**
• **LIN, Lujing**
  **Shenzhen, Guangdong 518106 (CN)**

(74) Representative: **Locas, Davide et al**
**Cantaluppi & Partners S.r.l.**
**Piazzetta Cappellato Pedrocchi, 18**
**35122 Padova (IT)**

(54)  **COMPOSITION, COMPOSITE SEPARATOR AND PREPARATION METHOD THEREFOR, AND LITHIUM ION BATTERY**

(57)    Disclosed are a composition, a composite separator and a preparation method therefor, and a lithium ion battery. The composition comprises 10-100 parts of a polymer resin, 0.5-10 parts of a polymer adhesive, 0-50 parts of an inorganic nanoparticle powder, and 0-40 parts of nanowires. The polymer resin comprises a low melting point polymer and a high melting point polymer, wherein the low melting point polymer and the high melting point polymer are the same substance; the weight ratio of the low melting point polymer to the high melting point polymer is (5-90):(10-95), the melting point of the low melting point polymer is 145°C or less, and the melting point of the high melting point polymer is in the range of 146-500°C. The combined use of the high and low melting point polymers can ensure the interface adhesion strength between a coating and an electrode sheet, and can also ensure the heat resistance of the coating, thus achieving a better effect while reduce swelling.

FIG. 1

EP 4 089 780 A1

## Description

## Technical Field

The present disclosure relates to the field of lithium ion battery, and in particular, to a composition, a composite separator, and a preparation method therefor, and a lithium ion battery.

## Background Art

In recent years, with the vigorous development of the 3C market and the electric vehicle market, lithium ion battery, as the most commonly used energy device, has become an indispensable item in life, and is also a mass-produced industrial product worldwide. As one of the important constituent parts of lithium ion battery, the separator plays the role of electronic insulation between the positive and negative electrodes and provides microporous channels for the migration of lithium ions, which is a key material to ensure the safety of the battery system and affect the performance of the battery.

At present, 3C products are becoming more and more delicate and compact, and the demand for high battery energy density is increasing day by day, and more electrode materials need to be accommodated in a small volume, so the thickness of the separator is getting thinner and thinner. The increase in the endurance mileage of electric vehicles will also require higher and higher battery energy density, resulting in the thickness of the separator to become thinner and thinner.

However, the trend of thinner and thinner lithium ion battery separator also brings some performance problems: the static electricity of the separator is too large, which leads to poor fit with the electrode sheet in the assembled battery or the separator melted and shrunk under a high temperature condition, so that contacting between the positive and negative electrodes causes the battery to short-circuit, resulting in the battery to have the risk of burning and exploding at high temperatures, and the mechanical property of the thin separator is poor, which leads to the degradation of the performance of lithium ion battery products. In addition, the currently commonly used polyolefin microporous membrane has poor adsorption to the electrolyte, which is not conducive to the conduction of lithium ions during the charging and discharging process.

## Summary

The purpose of the embodiments of the present disclosure is to provide a composition, a composite separator, and a preparation method therefor, and a lithium ion battery.

In a first aspect, the present disclosure provides a composition that can be used to prepare a composite separator;

in parts by weight, the composition comprises 10-100 parts of a polymer resin, 0.5-10 parts of a polymer adhesive, 0-50 parts of an inorganic nanoparticle powder and 0-40 parts of a nanowire,
wherein the polymer resin comprises a low melting point polymer and a high melting point polymer, wherein the low melting point polymer and the high melting point polymer are the same substance; the weight ratio of the low melting point polymer to the high melting point polymer is (5-90): (10-95), a melting point of the low melting point polymer is below 145°C, and a melting point of the high melting point polymer is in the range of 146-500°C.

The high melting point polymer has a high molecular weight, and swelling degree thereof is lower than that of the low melting point polymer, but the interface adhesion force provided by the low melting point polymer is higher than that of the high melting point polymer. The combined use of the high and low melting point polymers can improve the interface adhesion force between the composite separator and the electrode sheet while reducing swelling, and can improve the heat resistance of the composite separator, thereby reducing the separation of the composite separator from the electrode sheet in the electrolyte, reducing the occurrence of the bulge phenomenon of the battery, and reducing the occurrence of problems such as battery short-circuit.

In a second aspect, the present disclosure provides a composite separator, the composite separator comprises: a base material; and
the above composition, wherein the composition is coated and cured on the surface of the base material.

The composite separator has a strong interface adhesion force with the electrode sheet, is not prone to swelling, has a good heat resistance, and has a good mechanical property.

In a third aspect, the present disclosure provides a preparation method of the aforementioned composite separator, which comprises the steps of:

mixing uniformly the low melting point polymer, the high melting point polymer, the polymer adhesive and the long nanowires to obtain a first mixed solution;

mixing an organic solvent with the pore-forming agent to obtain a second mixed solution;

mixing uniformly the first mixed solution, the second mixed solution, the short nanowires and the inorganic nanoparticle powder to obtain a slurry; and

coating and curing the slurry on the surface of the base material,

wherein optionally, a nucleating agent is further added to the first mixed solution;

optionally, discontinuous coating is performed by microgravure coating method;

optionally, the organic solvent comprises any one of acetone, dimethylacetamide, dimethylformamide, chloroform, dichloromethane, dichloroethane, dimethyl sulfoxide or N-methylpyrrolidone.

The method adopts the phase inversion method to prepare the composite separator, which can obtain a porous membrane structure with uniform pore size and pores. The introduction of nanowires can reduce the loosely dispersed oversized porous structure in the cured coating, and turn it into a solid, dense and uniform macro-porous structure, which can effectively improve the mechanical strength of the composite separator. By adding long nanowires, short nanowires and inorganic nanoparticle powder step by step, the structure of the coating gradually changes from loose→semi-cross-linked denser→ close packing, which greatly improves the thermal shrinkage resistance of the coating and the mechanical property of the coated membrane. Further, discontinuous coating is performed by using the pattern microgravure method, which can make the coating have a high specific surface area, so that the coating has good adsorption performance to the electrolyte, which is beneficial to the conduction of lithium ions during the charging and discharging process.

In a fourth aspect, the present disclosure provides a lithium ion battery, wherein the lithium ion battery comprises the above-mentioned composite separator. In this lithium ion battery, by providing the above-mentioned composite separator, the conductivity of lithium ion is improved, the mechanical performance is improved, and the bonding force with the positive and negative electrode sheets is improved.

## Brief Description of Drawings

In order to illustrate the technical solutions of the embodiments of the present disclosure more clearly, the drawings need to be used in the embodiments will be briefly introduced below, it should be understood that the following drawings only show some embodiments of the present disclosure, and therefore should not be regarded as a limitation of the scope, and for those ordinarily skilled in the art, other relevant drawings can also be obtained in light of these drawings, without using any inventive efforts.

FIG. 1 is an electron microscope picture of a composite separator of the Example 1 in the present disclosure; and

FIG. 2 is an electron microscope picture of discontinuous coating of the composite separator of Example 3 in the present disclosure.

## Detailed Description of Embodiments

Embodiments of the present disclosure provide a composite separator, wherein the composite separator can reduce the separation of the composite separator from the electrode sheet in the electrolyte, reduce the occurrence of the bulge phenomenon of the battery, and reduce the occurrence of problems such as battery short-circuit.

The composite separator includes: a base material and a composition. The composition is coated and cured on the surface of the base material.

In some embodiments of the present disclosure, in parts by weight, the composition comprises 10-100 parts of a polymer resin, 0.5-10 parts of a polymer adhesive, 0-50 parts of an inorganic nanoparticle powder and 0-40 parts of a nanowire; the polymer resin comprises a low melting point polymer and a high melting point polymer, wherein the low melting point polymer and the high melting point polymer are the same substance; the weight ratio of the low melting point polymer to the high melting point polymer is (5-90): (10-95), a melting point of the low melting point polymer is below 145°C, and a melting point of the high melting point polymer is in the range of 146-500°C.

The low melting point polymer is used as the first adhesion agent, the high melting point polymer is used as the second adhesion agent, and the polymer adhesive is used as the third adhesion agent, the first adhesion agent ensures the adhesion force in the coating layer, and the second adhesion agent ensures the stability of the coating layer at high temperature, while the third adhesion agent acts as an auxiliary adhesion, which can achieve the effect of 1+1+1>3. Compared with one or two types of adhesion agents, the adhesion effect of three types of adhesion agents is better, and simultaneously, the coating layer maintains a good coating result under the high temperature condition of the battery, and has a wider application range.

Further, the polymer resin comprises any one of polyvinylidene fluoride, polyvinylidene fluoride-hexafluoropropylene copolymer, polyvinylidene fluoride-dichloroethylene copolymer, polyvinylidene fluoride-chlorotrifluoroethylene copolymer, polyvinylidene fluoride-tetrafluoroethylene copolymer, polystyrene, poly-n-butyl acrylate, polymethyl methacrylate, polyethyl methacrylate, poly-tert-butyl acrylate, polyacrylonitrile, polyvinyl acetate, acrylamide or polymethyl acrylate.

Further, the selection of the same material for the high and low melting point polymer resins is conducive to reducing the cumbersomeness in the use process, and is conducive to the large-scale production, procurement and post-processing of products. Further, the same polymer resin has high melting point and low melting point polymers due to different molecular weight, molecular structure and crystallinity.

Further, the polymer resin includes a low melting point polymer and a high melting point polymer, wherein the high melting point polymer has a high molecular weight, and swelling degree thereof is lower than that of the low melting point polymer, but the interface adhesion force provided by the low melting point polymer is higher than that of the high melting point polymer, and the combined use of high and low melting point polymers can ensure the interface adhesion force between the coating and the electrode sheet and the heat resistance of the coating to achieve better effect while reducing swelling.

Further optionally, the weight ratio of the low melting point polymer to the high melting point polymer is (10-80) :(15-90).

Exemplarily, the weight ratio of low melting point polymer to high melting point polymer is 44:56 or 16:84.

Further, the melting point of the low melting point polymer is within the range of 100-145°C; and the high melting point polymer has a melting point within the range of 146-200°C.

Exemplarily, the low melting point polymer has a melting point of 130°C and the high melting point polymer has a melting point of 180°C; or the low melting point polymer has a melting point of 135°C and the high melting point polymer has a melting point of 175°C.

Further, in parts by weight, the composition includes 0.1-10 parts of a nucleating agent.

By adding the nucleating agent, the crystallinity of the polymer resin can be further improved to reduce the swelling, cooperating with the high and low melting point polymers to play a synergistic role, which further reduces the swelling of the polymer coating in the electrolyte, and reduces the conditions such as the separator displacement, deformation and battery bulge caused by expansion in the electrolyte, thereby reducing the separation of the coating from the electrode sheet in the electrolyte, reducing the occurrence of the bulge phenomenon of the battery, and reducing the occurrence of problems such as battery short-circuit.

Further, the nucleating agent comprises at least one of benzoic acid, adipic acid, sodium benzoate, calcium stearate, sodium p-phenol sulfonate, calcium p-phenol sulfonate, sodium phenate, boron nitride, sodium carbonate or potassium carbonate.

In some embodiments of the present disclosure, nanowire includes a long nanowire and a short nanowire.

Simultaneous use of long and short nanowires can make the coating layer tighter, and greatly improve the mechanical strength of the composite separator.

Further, the long nanowire has a length within the range of 30-150 $\mu$m, and the short nanowire has a length within the range of 0.1-29 $\mu$m.

In the composite separator, nanowires are added to the polymer, and the nanowire material with one-dimensional nanometer size has stronger mechanical property and thermal stability, and can effectively improve the mechanical property and thermal stability of the coating layer. Further, within the above range, the lengths of the two types of nanowires decrease progressively, the long nanowires play the role of the main skeleton, and the short nanowires play the role of the support, and the two cooperate with each other, so that the structure of the composition changes from loose to dense. Further, the inorganic nanoparticle powder is added to the polymer resin to play the role of filling the voids, further filling the voids between the long nanowires and the short nanowires, so that the structure of the composition becomes closely packed, thereby improving the thermal shrinkage resistance of the coating layer and the mechanical property of the coating membrane.

In some embodiments, the long nanowire and the short nanowire are each independently selected from one or more of carbon nanotubes, silver nanowires, boron carbide nanowires, nanocellulose, copper hydroxide nanowires, silicon monoxide nanowires or hydroxyapatite nanowires.

Further optionally, the aspect ratio of the nanowire is greater than 60, the diameter of the nanowire is 1-100 nm, and the length is 0.1-150 $\mu$m.

Further, the weight ratio of the long nanowire to the short nanowire is (80-95) :(20-5).

Further optionally, the weight ratio of the long nanowire to the short nanowire is (81-94): (19-6). Further optionally, the weight ratio of the long nanowire to the short nanowire is (82-93): (18-7). Further optionally, the weight ratio of the long nanowire to the short nanowire is (85-90): (15-10).

Exemplarily, the weight ratio of the long nanowire to the short nanowire is 86:14, 94:6, or 64:36.

Further, the diameters of the long nanowire and the short nanowire are both in the range of 1-100 nm.

Further optionally, the diameters of the long nanowire and the short nanowire are both in the range of 10-100 nm.

Exemplarily, both the long nanowire and the short nanowire have diameters of 20 nm, 30 nm, or 50 nm.

Further, the length of the long nanowire is in the range of 35-145 μm, and the length of the short nanowire is in the range of 0.2-25 μm. Further optionally, the length of the long nanowire is in the range of 40-130 μm, and the length of the short nanowire is in the range of 0.5-20 μm. Further optionally, the length of the long nanowire is in the range of 50-100 μm, and the length of the short nanowire is in the range of 1-15 μm.

Exemplarily, the length of long nanowire is 50 μm and the length of short nanowire is 10 μm; or the length of long nanowire is 100 μm and the length of short nanowire is 20 μm; or the length of long nanowire is 120 μm and the length of short nanowire is 24 μm.

In some embodiments of the present disclosure, in parts by weight, the composition comprises 20-100 parts of a polymer resin, 1-10 parts of a nucleating agent, 1-10 parts of a polymer adhesive, and 0.1-50 parts of an inorganic nanoparticle powder and 0.1-40 parts of a nanowires.

Further, in parts by weight, the composition comprises 25-100 parts of a polymer resin, 1.5-9 parts of a nucleating agent, 1.5-9 parts of a polymer adhesive, 0.1-45 parts of an inorganic nanoparticle powder and 0.1-35 parts of a nanowires.

Further optionally, in parts by weight, the composition comprises 30-100 parts of a polymer resin, 2-8 parts of a nucleating agent, 2-8 parts of a polymer adhesive, 1-45 parts of an inorganic nanoparticle powder and 1-35 parts of a nanowires.

Further, the inorganic nanoparticle powder comprises at least one of aluminum hydroxide, aluminum oxide, silicon dioxide, barium titanate, magnesium oxide, boehmite, titanium oxide, calcium carbonate or zirconium dioxide.

Further, the polymer adhesive comprises at least one of styrene-butadiene latex, styrene-acrylic latex, polyvinyl acetate, polyvinyl alcohol, polyethyl acrylate, polybutyl methacrylate, ethylene-vinyl acetate copolymer or polyurethane.

In some embodiments, in parts by weight, the composition further includes 0.1-10 parts of a pore-forming agent, further optionally, 1-6 parts of a pore-forming agent.

By adding a pore-forming agent, a microphase separation structure can be induced to form a heat-resistant porous layer, thereby making the porous structure of the separator easier to be obtained.

In some embodiments of the present disclosure, the above-mentioned pore-forming agent can be selected from other solvents that are poor solvents relative to the above-mentioned polymer resin.

Further, the pore-forming agent is selected from at least one of pure water or polyol; pure water is preferred, and the formed coating layer will not release excessive impurities in the coagulation tank and the washing tank during the coagulation and washing process, reducing the difficulty of recycling wastewater in the coagulation tank and washing tank.

In some embodiments, in parts by weight, the composition further comprises 0.5-10 parts of a dispersant, the dispersant comprises at least one of carboxylate-type fluorine dispersant, triethyl phosphate, sulfonate-type fluorine dispersant, sodium polyacrylate, potassium polyacrylate or polyethylene glycol; further optionally, comprises 1-5 parts of a dispersant.

In some embodiments, in parts by weight, the composition further comprises 0.1-5 parts of an antistatic agent, and the antistatic agent comprises at least one of polythiophene, octadecyl dimethyl quaternary ammonium nitrate, trimethyl octadecyl ammonium acetate, N-hexadecyl pyridine nitrate, N-alkyl amino acid salt, betaine-type or imidazoline salt derivative; further optionally, comprises 0.5-2.5 parts of the antistatic agent.

By adding antistatic agent, the surface of the formed separator has less static electricity, which reduces the problem of uneven fit between the separator and the electrode sheet during the assembly process, and is easy to assemble the battery; and the anti-peeling ability of the separator and the bonding force with the positive and negative electrode sheets are higher, the hardness of the battery is improved, and the risk of short-circuit inside the battery is greatly reduced.

The composite lithium battery separator of the present disclosure has both a pore structure existing on the base material and a porous structure in the coating layer, and simultaneously, the pore-forming agent can better control the pore structure and increase the number of pores formed in the coating layer, thereby further improving the performance of the composite lithium battery separator.

Some embodiments of the present disclosure also provide a preparation method of the composite separator, which comprises:

mixing uniformly the low melting point polymer, the high melting point polymer, the polymer adhesive and the long nanowires to obtain a first mixed solution;
mixing an organic solvent with the pore-forming agent to obtain a second mixed solution;
mixing uniformly the first mixed solution, the second mixed solution, the short nanowires and the inorganic nanoparticle powder to obtain a slurry; and
coating and curing the slurry on the surface of the base material;

The method adopts the phase inversion method to prepare the composite separator, and can obtain a porous membrane structure with uniform pore size and pores. The addition of the pore-forming agent can induce a microphase separation structure, so that the coating forms a porous structure. The introduction of nanowires can reduce the loosely dispersed oversized porous structure in the coating, and turn it into a solid, dense and uniform macro-porous structure, which can effectively improve the mechanical strength of the composite separator. By gradually adding long nanowires, short nanowires and inorganic nanoparticle powder, the structure of the coating gradually changes from loose→semi-cross-linked denser→tight packing, which greatly improves the thermal shrinkage resistance of the coating layer and the mechanical property of the coated membrane. In some embodiments of the present disclosure, when the composite separator is prepared, in terms of weight percentage, 5%-50% of the composition and 50%-95% of the organic solvent are included.

Further, the organic solvent comprises any one of acetone, dimethylacetamide, dimethylformamide, chloroform, dichloromethane, dichloroethane, dimethyl sulfoxide or N-methylpyrrolidone.

In other optional embodiments of the present disclosure, the above-mentioned organic solvent may also select other polar solvents.

In some embodiments, a nucleating agent is also added to the first mixed solution. By adding the nucleating agent, the crystallinity of the polymer resin can be further improved and swelling can be reduced.

In some embodiments, when the above-mentioned slurry is coated, the slurry is coated to at least one surface of the base material by means of coating, and cured to form a coating layer.

Further optionally, discontinuous coating is performed by using pattern microgravure method, and coating coverage rate (30-95%) is adjusted by adjusting the engraved area on the roller surface, which can make the coating have a high specific surface area, so as to improve the adsorption performance of the coating to the electrolyte, thereby improving the conduction of lithium ions during the charging and discharging process.

Further, the step of mixing uniformly the first mixed solution, the second mixed solution, the short nanowires and the inorganic nanoparticle powder comprises:

dividing the second mixed solution into a first part and a second part, first mixing the first part with the first mixed solution, the short nanowires and the inorganic nanoparticle powder, and then adding the second part, wherein the volume ratio of the first part and the second part is (6~8): (4~2).

By adding the second mixed solution in two parts, the pore structure in the coating can be further improved, so that there are larger pore diameters on the surface and the bottom of the coating.

Further optionally, the volume ratio of the first part to the second part is 7:3.

Further, the first mixed solution, the second mixed solution, the short nanowires and the inorganic nanoparticle powder are uniformly mixed, and then the dispersant and the antistatic agent are further added and mixed uniformly to obtain the slurry.

Further, the base material can be selected from polymer-based membrane, non-woven fabric or organic/inorganic composite membrane, wherein the polymer-based membrane can be polyethylene membrane, polypropylene membrane, polypropylene/polyethylene/polypropylene composite membrane, polyimide membrane, polyvinylidene fluoride membrane, etc.; the non-woven fabric can be polyethylene non-woven fabric, polypropylene non-woven fabric, polyimide non-woven fabric, etc.; the organic/inorganic composite membrane can be ceramic coating membrane, aramid coating membrane, polyvinyl fluoride coating membrane, etc.

The composite lithium battery separator prepared by using this method is of a multilayered pore structure, and the densely packed inorganic particles and nanofibers provide the role of a support and a skeleton, so as to achieve the function of shaping, and simultaneously, reduce the risk of part of the polymer adhesive and dispersant being washed away by water during the washing process of the coating membrane, thereby ensuring that the separator has excellent low swelling property, high temperature resistance and mechanical property, reducing the probability of occurrence of short-circuit of the battery, and improving the hardness and shape retention ability of the cell.

In some embodiments, the preparation method of the composite separator comprises the following steps:

S1: mixing and stirring the weighed low melting point polymer, high melting point polymer, polymer adhesive, nucleating agent and long nanowires uniformly to obtain a first mixed solution;

S2: stirring the weighed organic solvent and the pore-forming agent uniformly to obtain a second mixed solution;

S3: adding the second mixed solution, the short nanowires and the inorganic nanoparticle powder to the first mixed solution obtained in step S1 in sequence, and stirring the mixture uniformly to obtain a third mixed solution, wherein optionally, the second mixed solution is divided into a first part and a second part, and is added to the first mixed solution in two times, wherein according to the volume ratio, the first part: the second part is 7:3;

S4: adding dispersant and antistatic agent to the third mixed solution obtained in step S3 in sequence, and stirring the mixture uniformly, and then filtering the mixture to obtain slurry, wherein optionally, dispersant is first added, and stirred for 10-20min, and then antistatic agent is added, and stirred for 30-45min;

S5: coating the slurry on one side or two sides of the base material, and after coagulation, washing, drying and shaping, obtaining the composite separator.

The above-mentioned coating method includes one of dip coating method, microgravure coating method, pattern microgravure coating method, spray coating method, slope flow coating method or slit coating method, and the drying temperature is 40-100°C.

The pattern microgravure method is preferred for discontinuous coating, and the coating coverage rate (30-95%) can be adjusted by adjusting the engraved area on the roll surface, which can improve the coating to have a high specific surface area, so that the coating has a good adsorption performance to the electrolyte. It is beneficial to the conduction of lithium ions during charging and discharging process.

Some embodiments of the present disclosure also provide a lithium ion battery, the lithium ion battery includes the composite separator in the foregoing embodiments. In this lithium ion battery, by providing the above-mentioned composite separator, the lithium ion conductivity is improved, the mechanical performance is improved, and the bonding force with the positive and negative electrode sheets is improved.

The features and properties of the present disclosure will be described in detail below with reference to the examples and comparative examples.

Example 1

A composite separator was provided, and prepared according to the following steps:

① placing weighed 12kg of polyvinylidene fluoride-hexafluoropropylene copolymer (according to the weight ratio, material with low melting point of 130°C: material with high melting point of 153.5°C=90:10), 1.5kg styrene-butadiene latex, 0.3kg sodium benzoate and 2.4kg long nanowires (nanocellulose, 100$\mu$m in length) into a large-capacity stirring tank and stirring at a rotating speed of 30r/min for 20min;

②placing weighed 69kg of N-methylpyrrolidone and 1.0kg of ultrapure water into a stirring tank, and stirring for 20 minutes at a rotating speed of 1000 r/min for dispersion and 20 r/min for stirring to obtain a mixed solution;

③ adding 49kg of the mixed solution prepared in ② into the large-capacity stirring tank of ①, and stirring at a stirring speed of 35 r/min and a dispersion speed of 3000 r/min for 20 min; continuing to add 0.6 kg of short nanowires (nanocellulose, 20$\mu$m in length), and stirring at 35r/min stirring speed and 3000R dispersion speed for 20min; continuing to add 13.5kg of aluminum hydroxide powder (particle size of 0.8$\mu$m), and stirring at 35r/min stirring speed and 3500R dispersion speed for 30min, finally, adding 21 kg of the mixed solution prepared in ②, and stirring at a stirring speed of 40 r/min and a dispersion speed of 3500 r/min for 20 min;

④adding 1.0kg of sodium polyacrylate into the stirring tank, stirring the slurry at a stirring speed of 30r/min and a dispersion speed of 2500r/min for 10 min, then adding 0.1 kg of polythiophene, and stirring at a stirring speed of 18r/min and a dispersion speed of 600r/min for 30min, after the slurry was evenly stirred, filtering the slurry with a 200-mesh nylon screen to obtain a slurry with a solid content of 30% and a viscosity of 1000cp;

⑤using the microgravure coating method (for the surface of the microgravure roller, the width of the engraved area: the width of the non-engraved area = 800$\mu$m: 500$\mu$m) to coat the slurry on the PE base membrane with a thickness of 16 $\mu$m, and after solidification, washing, drying and shaping, obtaining a composite lithium ion battery separator, wherein the composite lithium ion battery separator had a thickness of 24.6 $\mu$m, and each side coating layer had a thickness of 4 $\mu$m.

Example 2

A composite separator was provided, and prepared according to the following steps:

①placing weighed 13.7kg of polyvinylidene fluoride (according to the weight ratio, material with low melting point of 132.6°C: material with high melting point of 166.3°C=85:15), 0.3kg polyvinyl acetate, 0.64kg boron nitride and 1.8kg long nanowires (boron carbide nanowires, 95$\mu$m in length) into a large-capacity stirring tank and stirring at a rotating speed of 25r/min for 20min;

② placing weighed 78 kg of N-methylpyrrolidone and 6.0 kg of ultrapure water into a stirring tank, and stirring for 20 minutes at a rotating speed of 1500 r/min for dispersion and 15 r/min for stirring to obtain a mixed solution;

③ adding 58.8kg of the mixed solution prepared in ② into the large-capacity stirring tank of ①, and stirring at a stirring speed of 30 r/min and a dispersion speed of 3000 r/min for 25 min; continuing to add 0.2 kg of short nanowires (boron carbide nanowires with a length of 20$\mu$m), and stirring at a stirring speed of 35r/min and a dispersion speed of 3000R for 20min, finally, adding 25.2kg of the mixed solution prepared in ②, and stirring at a stirring speed of 30r/min and a dispersion speed of 3500r/min for 30min;

④ adding 0.5kg of triethyl phosphate into the stirring tank, stirring the slurry at a stirring speed of 30r/min and a dispersing speed of 2000r/min for 15min, then adding 0.5kg of octadecyl dimethyl quaternary ammonium nitrate, stirring at a stirring speed of 18 r/min and a dispersion speed of 600 r/min for 30 min, after the slurry was evenly stirred, filtering the slurry with a 200-mesh nylon screen to obtain a slurry with a solid content of 16% and a viscosity of 410.5cp;

⑤using the pattern microgravure coating method (for the surface of the microgravure roller, the width of the engraved area: the width of the non-engraved area = 800μm: 350 μm) to coat the slurry on a ceramic membrane with a thickness of 22 μm, and after solidification, washing, drying and shaping, obtaining a composite lithium ion battery separator, wherein the composite lithium ion battery separator had a thickness of 24.5 μm, and each side coating layer had a thickness of 1 μm.

Example 3

A composite separator was provided, and prepared according to the following steps:

①placing weighed 6.65 kg of polyvinylidene fluoride (according to the weight ratio, material with low melting point of 135°C: material with high melting point of 170°C = 5:95), 0.15 kg polyethyl acrylate, 0.12 kg sodium carbonate and 1.0 kg long nanowires (hydroxyapatite nanowires, 90μm in length) into a large-capacity stirring tank and stirring at a rotating speed of 35r/min for 30min;

②placing weighed 85kg of dimethylacetamide and 7.0kg of ultrapure water, into a stirring tank, and stirring for 25 min at a rotating speed of 1100 r/min for dispersion and 20 r/min for stirring to obtain a mixed solution;

③adding 64.4kg of the mixed solution prepared in ② into the large-capacity stirring tank of ①, and stirring at a stirring speed of 30 r/min and a dispersion speed of 3000 r/min for 20 min; continuing to add 0.2 kg of short nanowires (hydroxyapatite nanowires, 10μm in length), and stirring at 35r/min stirring speed and 3000R dispersion speed for 20min, finally, adding 27.6kg of the mixed solution prepared in ②, and stirring at a stirring speed of 40 r/min and a dispersion speed of 3500 r/min for 20 min;

④ adding 0.5kg polyethylene glycol into the stirring tank, stirring the slurry at a stirring speed of 25r/min and a dispersion speed of 2000r/min for 20min, then adding 0.6 kg of N-alkyl amino acid salt, and stirring for 30 min at a stirring speed of 20 r/min and a dispersion speed of 600 r/min, after the slurry was evenly stirred, filtering the slurry with a 200-mesh nylon screen to obtain a slurry with a solid content of 8% and a viscosity of 180cp;

⑤ using the pattern microgravure coating method (for the surface of the microgravure roller, the engraved area: the non-engraved area = 600: 600) to coat the slurry on the PP base membrane with a thickness of 14 μm, and after solidification, washing, drying and shaping, preparing a composite lithium ion battery separator, wherein the composite lithium ion battery separator had a thickness of 16.6 μm, and each side coating layer had a thickness of 1 μm.

Example 4

A composite separator was provided, and prepared according to the following steps:

① placing weighed 8.0kg of polyvinylidene fluoride-dichloroethylene copolymer (according to weight ratio, material with low melting point of 129°C: material with high melting point of 162.5°C=60:40), 1.0kg styrene-acrylic latex, 0.24kg sodium p-phenol sulfonate and 1.8 kg long nanowires (carbon nanotubes, 75μm in length) into a large-capacity stirring tank, and stirring at a rotating speed of 30r/min for 20min;

② placing weighed 78 kg of acetone and 2.0 kg of ultrapure water into a stirring tank, and stirring for 20 min at a rotating speed of 1000 r/min for dispersion and 20 r/min for stirring to obtain a mixed solution;

③ adding 56kg of the mixed solution prepared in ② into the large-capacity stirring tank of ①, and stirring at a stirring speed of 35 r/min and a dispersion speed of 3000 r/min for 20 min; continuing to add 0.2 kg of short nanowires (carbon nanotubes, 5μm in length), and stirring at 35r/min stirring speed and 3000R dispersion speed for 20min; continuing to add 9.0kg aluminum oxide powder (particle size of 0.75μm), and stirring at 35r/min stirring speed and 3500R dispersion speed for 30min, finally, adding 24 kg of the mixed solution prepared in ②, and stirring at a stirring speed of 40 r/min and a dispersion speed of 3500 r/min for 20 min;

④adding 5kg of carboxylate-type fluorine dispersant into the stirring tank, stirring the slurry for 10min at a stirring speed of 30r/min and a dispersion speed of 2500r/min, and then adding 0.1kg of N-hexadecyl pyridine nitrate, and stirring at a stirring speed of 18r/min and a dispersion speed of 600r/min for 30min, after the slurry was evenly stirred, filtering the slurry with a 200-mesh nylon screen to obtain a slurry with a solid content of 20% and a viscosity of 630cp;

⑤using the slit coating method to coat the slurry on the PP/PE/PP composite base membrane with a thickness of 16 μm, and after solidification, washing, drying and shaping, obtaining a composite lithium ion battery separator, wherein the composite lithium ion battery separator had a thickness of 20.7 μm, and each side coating layer had a

thickness of 2 $\mu$m.

Example 5

A composite separator was provided, and prepared according to the following steps:

① placing weighed 9.8kg of polyvinylidene fluoride-hexafluoropropylene copolymer (according to weight ratio, material with low melting point of 129°C: material with high melting point of 162.5°C =10:90), 0.2kg polyvinyl alcohol, 0.3kg calcium stearate into a large-capacity stirring tank, and stirring at a rotating speed of 35r/min for 25min;

②placing weighed 82kg of NMP and 8.0kg of ultrapure water into a stirring tank, and stirring for 20 min at a rotating speed of 1500 r/min for dispersion and 20 r/min for stirring to obtain a mixed solution;

③ adding 63kg of the mixed solution prepared in ② into the large-capacity stirring tank of ①, and stirring at a stirring speed of 30 r/min and a dispersion speed of 3000 r/min for 30 min; continuing to add 27 kg of the mixed solution prepared in ②, and stirring at 30r/min stirring speed and 3500r/min dispersion speed for 30min;

④adding 0.5kg potassium polyacrylate into the stirring tank, stirring the slurry at a stirring speed of 25r/min and a dispersion speed of 2600r/min for 15min, then adding 0.5kg trimethyl octadecyl ammonium acetate, and stirring at a stirring speed of 20r/min and a dispersion speed of 800r/min for 25min, after the slurry was evenly stirred, filtering the slurry with a 200-mesh nylon screen to obtain a slurry with a solid content of 10% and a viscosity of 248.5cp;

⑤using the pattern microgravure coating method (for the surface of the microgravure roller, the width of the engraved area: the width of the non-engraved area = 900$\mu$m: 300 $\mu$m), coating the slurry on a ceramic membrane with a thickness of 11 $\mu$m, and after solidification, washing, drying and shaping, obtaining a composite lithium ion battery separator, wherein the composite lithium ion battery separator had a thickness of 13.8 $\mu$m, and each side coating layer had a thickness of 1 $\mu$m.

Comparative Example 1

A composite separator was provided, and prepared according to the following steps:

① placing weighed 9.8kg of polyvinylidene fluoride-hexafluoropropylene copolymer (high melting point of 153°C) and 0.2kg of polyvinyl alcohol into a large-capacity stirring tank, and stirring at a rotating speed of 35r/min for 25min;

②placing weighed 82kg of NMP and 8.0kg of ultrapure water into a stirring tank, and stirring for 20 min at a rotating speed of 1500 r/min for dispersion and 20 r/min for stirring to obtain a mixed solution;

③adding 63kg of the mixed solution to the large-capacity stirring tank of ①, and stirring at a stirring speed of 30r/min and a dispersion speed of 3000r/min for 30min; continuing to add 27kg of the mixed solution, and stirring at a stirring speed of 30r/min and a dispersion speed of 3500r/min for 30min;

④adding 0.5kg of potassium polyacrylate into the stirring tank, stirring the slurry at a stirring speed of 25r/min and a dispersion speed of 2600r/min for 15min, then adding 0.5kg of trimethyl octadecyl ammonium acetate, and stirring at a stirring speed of 20r/min and a dispersion speed of 800r/min for 25min, after the slurry was evenly stirred, filtering the slurry with a 200-mesh nylon screen to obtain a slurry with a solid content of 10% and a viscosity of 300.5cp;

⑤using the pattern microgravure coating method (for the surface of the microgravure roller, the width of the engraved area: the width of the non-engraved area = 900$\mu$m: 300 $\mu$m), coating the slurry on a ceramic membrane with a thickness of 11 $\mu$m, and after solidification, washing, drying and shaping, obtaining a composite lithium ion battery separator, wherein the composite lithium ion battery separator had a thickness of 13.6 $\mu$m, and each side coating layer had a thickness of 1 $\mu$m.

Comparative Example 2

This comparative example provided a lithium ion battery separator, which was a polypropylene-based membrane with a thickness of 14.4 $\mu$m and a porosity of 47%, and was not subjected to any coating treatment.

Comparative Example 3

This comparative example provided a lithium ion battery separator coated with ceramic slurry (90% alumina particles + 10% acrylate resin, wherein solvent is ultrapure water), the thickness of the separator is 22.3 $\mu$m, wherein the base membrane is a polyethylene base membrane with a thickness of 16 $\mu$m and a porosity of 51%; the traditional ceramic slurry was coated on both sides to form a coating, and the thickness of the coating on each side was 3 $\mu$m.

The products of the examples and comparative examples are tested below through experiments.

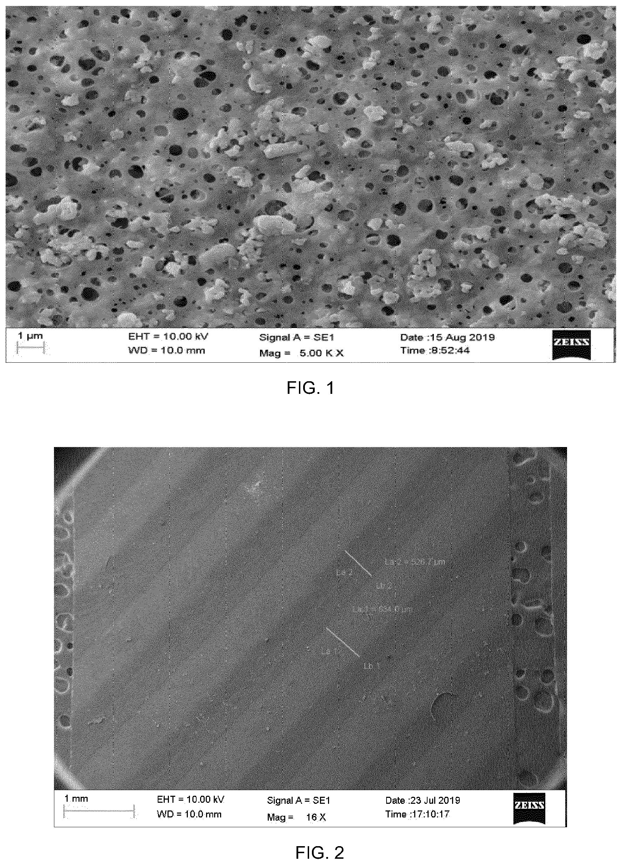

1. Electron microscope scanning was performed on the composite lithium ion battery separators of Example 1 and Example 3, and FIG. 1 is an electron microscope picture.

It can be seen from FIG. 1 that the composite lithium ion battery separator is of a porous structure and has a very high porosity. Therefore, the composite lithium ion battery separator of the present disclosure has high ionic conductivity and low swelling property.

It can be seen from FIG. 2 that the lithium ion battery separator prepared by discontinuous coating of the patterned microgravure has low resistance and high specific surface area, which greatly improves the infiltration efficiency of the electrolyte and the conduction efficiency of lithium ions.

2. The coating porosity, thermal shrinkage, interface adhesion force between the coating and the electrode sheet, tensile strength and elongation at break were tested for the composite lithium ion battery separators of Examples 1-5, the lithium ion battery separator of Comparative Example 1, and the lithium ion battery separator of Comparative Example 2, test methods thereof are as follows:

1. Thermal shrinkage

①sample: taking 6 samples of 50mm × 50mm uniformly in a width direction of the membrane roll;

②clamping the samples between parallel paper sheets, and placing flatly them on the stainless steel plate in the constant-temperature oven that reaches the specified temperature, wherein the stainless steel plate was located in the middle part of the constant-temperature oven;

③taking them out after heating at a constant temperature of 150°C for 0.5h, after cooling to ambient temperature, measuring the longitudinal and transverse lengths, calculating the longitudinal and transverse thermal shrinkage rates separately according to the following formula, and taking the arithmetic mean value of 6 samples;

$$S=100\% * (L1-L2)/ L1$$

where S-thermal shrinkage rate/%, L1-length before heating/mm; and L2-length after heating/mm.

2. Interface adhesion force

The test was carried out according to the provisions of GB/T 1040.3, 5 samples were taken from the product, wherein cut size was 1.5cm*15cm, the samples and the battery electrode sheet sample were completely overlapped together to be placed on a hot-pressing shaping machine for hot-pressing, wherein the parameters of hot-pressing shaping machine were set as follows: the temperature was 70°C, unit pressure was 4Mpa, heat preservation time was 1s, and hold pressure time was 1s, wherein the electrode sheet is lithium cobaltate electrode sheet.

The CMT series microcomputer-controlled electronic universal (tensile force) testing machine was used for measurement, and the tensile speed was 300mm/min, after the test was completed, the average value of the measured values of 5 samples was taken.

3. Tensile strength and elongation at break

The test was carried out according to the provisions of GB/T 1040[1].3-2006.

Five samples were taken from the product, wherein cutting width was 15mm and the length was 150mm (the test gauge length of the sample was 100mm), after the test was completed, the average value of the measured values of the 5 samples was taken.

The data results of various tests are shown in the following table.

EP 4 089 780 A1

| Item | | Unit | Example 1 | Example 2 | Example 3 | Example 4 | Example 5 | Comparative Example 1 | Comparative Example 2 | Comparative Example 3 |
|---|---|---|---|---|---|---|---|---|---|---|
| base membrane | | | PE: 16 μm | PE + ceramic: 22 μm | PP: 14 μm | PP/PE/PP: 16 μm | PE + ceramic: 11 μm | PE + ceramic: 11 μm | PP: 14 μm | PE: 16 μm |
| coating film thickness | | μ m | 24.6 | 24.5 | 16.6 | 20.7 | 13.8 | 13.6 | 14.4 | 22.3 |
| coating thickness | | | 8.6 | 2.5 | 2.6 | 4.7 | 2.7 | 2.6 | / | 6.3 |
| coating porosity | | % | 67.9 | 70.1 | 73.7 | 65.1 | 69.5 | 69.0 | 47.0 | 56.4 |
| thermal shrinkage (130°C/1h) | M D | % | 2.5 | 1.3 | 4.5 | 4.0 | 1.0 | 1.0 | 7.5 | 3.0 |
| | T D | | 1.8 | 0.4 | 0.0 | 0.0 | 0.4 | 0.8 | 0.3 | 2.5 |
| thermal shrinkage (150°C/0.5h) | M D | % | 4.8 | 2.5 | 5.7 | 5.2 | 1.4 | 1.5 | 35.0 | 5.0 |
| | T D | | 4.6 | 1.5 | 0.0 | 0.5 | 0.4 | 0.5 | 0.2 | 4.8 |
| bonding strength of coating and electrode sheet | | N/m | 50 | 20 | 15 | 40 | 15 | 8 | / | / |
| tensile strength | M D | Mpa | 201.0 | 160.3 | 185.6 | 180.5 | 153.4 | 150.2 | 178.8 | 154.2 |
| | T D | | 172.8 | 142.7 | 15.2 | 14.1 | 132.0 | 132.0 | 13.1 | 131.8 |
| elongation at break | M D | % | 167.9 | 125.2 | 126.2 | 130.1 | 108.8 | 105.5 | 125.6 | 120.8 |
| | T D | | 137.3 | 124.7 | 574.8 | 580.5 | 108.0 | 104.0 | 488.2 | 121.6 |

As can be seen from the above table, the composite lithium ion battery separator prepared according to the preparation method of the present disclosure has good thermal shrinkage performance and high adhesion force with the electrode sheet, which is significantly better than the uncoated separator and the separator coated by ceramic slurry in the comparative example.

Moreover, from the comparison between Examples 1, 2 and Comparative Example 3 (Examples 1, 2 and Comparative Example 3 are all PE base material separators prepared by wet method) and the comparison between Examples 3, 4 and Comparative Example 2 (Examples 3, 4 and Comparative Example 2 are all PP base material separators prepared by dry method), it can be seen that after adding nanowires to the coating, the thermal shrinkage, tensile strength and elongation at break are improved to varying degrees, indicating that nanofibers can significantly improve the thermal shrinkage and mechanical property of the coated membrane.

From the comparison between Example 5 and Comparative Example 1, it can be seen that after the combined use of high and low melting point polymers and the introduction of nucleating agent are performed in the coating, the interface adhesion force between the coating and the electrode sheet is increased by 75%, which can better reduce the bulge phenomenon, and improve cell safety.

The composite lithium ion battery separator of the present disclosure has a low swelling ratio, the introduced nanowires greatly improve the ionic conductivity of the separator, and the high temperature resistance and mechanical property of the separator, and the lithium ion battery separator prepared by discontinuous coating of pattern microgravure method not only has low resistance, but also has good gas permeability and high specific surface area, high lithium ion conduction efficiency and low swelling property of the separator. The preparation method of the composite lithium ion battery separator of the present disclosure is suitable for large-scale production, thereby improving practicability and economy thereof.

The above descriptions are only preferred embodiments of the present disclosure, and are not intended to limit the present disclosure, for those skilled in the art, the present disclosure may have various modifications and changes. Any modification, equivalent replacement, improvement, etc. made within the spirit and principle of the present disclosure shall be included within the protection scope of the present disclosure.

**Claims**

1. A composition, **characterized in that** the composition is applicable to prepare a composite separator,

   wherein in parts by weight, the composition comprises 10-100 parts of a polymer resin, 0.5-10 parts of a polymer adhesive, 0-50 parts of an inorganic nanoparticle powder and 0-40 parts of a nanowire,
   wherein the polymer resin comprises a low melting point polymer and a high melting point polymer, wherein the low melting point polymer and the high melting point polymer are the same substance; a weight ratio of the low melting point polymer to the high melting point polymer is (5-90): (10-95), a melting point of the low melting point polymer is below 145°C, and a melting point of the high melting point polymer is in a range of 146-500°C.

2. The composition according to claim 1,

   wherein the melting point of the low melting point polymer is in a range of 100-145°C; and the melting point of the high melting point polymer is in a range of 146-200°C; and
   optionally, the polymer resin comprises any one of polyvinylidene fluoride, polyvinylidene fluoride-hexafluoropropylene copolymer, polyvinylidene fluoride-dichloroethylene copolymer, polyvinylidene fluoride-chlorotrifluoroethylene copolymer, polyvinylidene fluoride-tetrafluoroethylene copolymer, polystyrene, poly-n-butyl acrylate, polymethyl methacrylate, polyethyl methacrylate, poly-tert-butyl acrylate, polyacrylonitrile, polyvinyl acetate, acrylamide or polymethyl acrylate.

3. The composition according to claim 1 or 2,

   wherein the nanowire comprises a long nanowire and a short nanowire, the long nanowire has a length within a range of 30-150 $\mu$m, and the short nanowire has a length within a range of 0.1-29 $\mu$m;
   optionally, a weight ratio of the long nanowire to the short nanowire is (80-95): (20-5);
   optionally, the long nanowire and the short nanowire both have a diameter within a range of 1 to 100 nm; and
   optionally, the long nanowire and the short nanowire are each independently selected from one or more of carbon nanotubes, silver nanowires, boron carbide nanowires, nanocellulose, copper hydroxide nanowires, silicon monoxide nanowires or hydroxyapatite nanowires.

4.  The composition according to claim 1,

    wherein in parts by weight, the composition comprises 0.1-10 parts of a nucleating agent;
    optionally, the nucleating agent comprises at least one of benzoic acid, adipic acid, sodium benzoate, calcium stearate, sodium p-phenol sulfonate, calcium p-phenol sulfonate, sodium phenate, boron nitride, sodium carbonate or potassium carbonate; optionally, the inorganic nanoparticle powder comprises at least one of aluminum hydroxide, aluminum oxide, silicon dioxide, barium titanate, magnesium oxide, boehmite, titanium oxide, calcium carbonate or zirconium dioxide; and optionally, the polymer adhesive comprises at least one of styrene-butadiene latex, styrene-acrylic latex, polyvinyl acetate, polyvinyl alcohol, polyethyl acrylate, polybutyl methacrylate, ethylene-vinyl acetate copolymer or polyurethane.

5.  The composition according to claim 1,

    wherein in parts by weight, the composition further comprises 0.5-10 parts of a dispersant, the dispersant comprises at least one of carboxylate-type fluorine dispersant, triethyl phosphate, sulfonate-type fluorine dispersant, sodium polyacrylate, potassium polyacrylate or polyethylene glycol;
    optionally, in parts by weight, the composition further comprises 0.1-5 parts of an antistatic agent, and the antistatic agent comprises at least one of polythiophene, octadecyl dimethyl quaternary ammonium nitrate, trimethyl octadecyl ammonium acetate, N-hexadecyl pyridine nitrate, N-alkyl amino acid salt, betaine-type or imidazoline salt derivative;
    optionally, in parts by weight, the composition further comprises 0.1-10 parts of a pore-forming agent, and the pore-forming agent comprises at least one of pure water or polyol.

6.  A composite separator, **characterized by** comprising:

    a base material; and
    the composition according to any one of claims 1 to 5, wherein the composition is coated and cured on a surface of the base material.

7.  A preparation method of the composite separator according to claim 6, **characterized by** comprising steps of:

    mixing uniformly the low melting point polymer, the high melting point polymer, the polymer adhesive and the long nanowire to obtain a first mixed solution;
    mixing an organic solvent with a pore-forming agent to obtain a second mixed solution;
    mixing uniformly the first mixed solution, the second mixed solution, the short nanowire and the inorganic nanoparticle powder to obtain a slurry; and
    coating and curing the slurry on the surface of the base material,
    wherein optionally, a nucleating agent is further added to the first mixed solution;
    optionally, discontinuous coating is performed by microgravure coating method; and
    optionally, the organic solvent comprises any one of acetone, dimethylacetamide, dimethylformamide, chloroform, dichloromethane, dichloroethane, dimethyl sulfoxide or N-methylpyrrolidone.

8.  The preparation method of the composite separator according to claim 7,
    wherein the step of mixing uniformly the first mixed solution, the second mixed solution, the short nanowire and the inorganic nanoparticle powder comprises:

    dividing the second mixed solution into a first part and a second part, first mixing the first part with the first mixed solution, the short nanowire and the inorganic nanoparticle powder, and then adding the second part,
    wherein a volume ratio of the first part and the second part is (6~8): (4~2).

9.  The preparation method of the composite separator according to claim 7,
    wherein the first mixed solution, the second mixed solution, the short nanowire and the inorganic nanoparticle powder are uniformly mixed, and then a dispersant and an antistatic agent are further added and mixed uniformly to obtain the slurry.

10. A lithium ion battery, **characterized in that** the lithium ion battery comprises the composite separator according to claim 6.

FIG. 1

FIG. 2

## INTERNATIONAL SEARCH REPORT

| International application No. |
| --- |
| **PCT/CN2020/085324** |

| A. | CLASSIFICATION OF SUBJECT MATTER |
| --- | --- |
| | H01M 10/052(2010.01)i; H01M 50/40(2021.01)i |

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 熔点, 隔板, 隔膜, 隔离膜, 分离件, 涂层, 有机物, 聚合物, melt+, diaphragm+, membrane+, separator+, coat+, polymer+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109935770 A (SHENZHEN ZHONGXING NEW MATERIAL TECHNOLOGY CO., LTD.) 25 June 2019 (2019-06-25) description paragraphs [0009]-[0010], [0014]-[0015], [0019], [0034]-[0038], [0048]-[0049] | 1-2, 4-6, 10 |
| Y | CN 109935770 A (SHENZHEN ZHONGXING NEW MATERIAL TECHNOLOGY CO., LTD.) 25 June 2019 (2019-06-25) description paragraphs [0009]-[0010], [0014]-[0015], [0019], [0034]-[0038], [0048]-[0049] | 1, 3, 7-9 |
| Y | CN 108807825 A (SHENZHEN SENIOR TECHNOLOGY MATERIAL CO., LTD.) 13 November 2018 (2018-11-13) description, paragraphs [0006]-[0021] | 1, 3, 7-9 |
| Y | CN 110729440 A (SHENZHEN ZHONGXING NEW MATERIAL TECHNOLOGY CO., LTD.) 24 January 2020 (2020-01-24) description, paragraphs [0037]-[0046] and [0064]-[0068] | 1, 3, 7-9 |
| Y | CN 109473602 A (BYD COMPANY LTD.) 15 March 2019 (2019-03-15) description, paragraphs [0066]-[0071] | 1, 3, 7-9 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 January 2021** | **15 January 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/085324**

### C.    DOCUMENTS CONSIDERED TO BE RELEVANT

| Category* | Citation of document, with indication, where appropriate, of the relevant passages | Relevant to claim No. |
|---|---|---|
| A | CN 107123767 A (SHENZHEN XURAN ELECTRONICS CO., LTD.) 01 September 2017 (2017-09-01)<br>        entire document | 1-10 |
| A | US 2015372275 A1 (SAMSUNG SDI CO., LTD.) 24 December 2015 (2015-12-24)<br>        entire document | 1-10 |
| A | CN 110739430 A (SHENZHEN ZHONGXING NEW MATERIAL TECHNOLOGY CO., LTD.) 31 January 2020 (2020-01-31)<br>        entire document | 1-10 |

Form PCT/ISA/210 (second sheet) (January 2015)

**INTERNATIONAL SEARCH REPORT**
Information on patent family members

International application No.

**PCT/CN2020/085324**

| Patent document cited in search report | | | Publication date (day/month/year) | Patent family member(s) | | | Publication date (day/month/year) |
|---|---|---|---|---|---|---|---|
| CN | 109935770 | A | 25 June 2019 | None | | | |
| CN | 108807825 | A | 13 November 2018 | CN | 108807825 | B | 21 August 2020 |
| CN | 110729440 | A | 24 January 2020 | None | | | |
| CN | 109473602 | A | 15 March 2019 | None | | | |
| CN | 107123767 | A | 01 September 2017 | CN | 107123767 | B | 03 April 2020 |
| US | 2015372275 | A1 | 24 December 2015 | KR | 101962418 | B1 | 27 March 2019 |
| | | | | KR | 20160000547 | A | 05 January 2016 |
| | | | | US | 10230090 | B2 | 12 March 2019 |
| CN | 110739430 | A | 31 January 2020 | None | | | |

Form PCT/ISA/210 (patent family annex) (January 2015)